Europäisches Patentamt

European Patent Office

Office européen des brevets

(19)

(11) **EP 1 156 299 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(51) Int Cl.[7]: **G01D 18/00**, G01D 3/02, G01D 5/16

(21) Anmeldenummer: **01111876.7**

(22) Anmeldetag: **16.05.2001**

(54) **Messumformer für potentiometrische Positionssensoren und Verfahren zur Parametrierung**

Measuring transducer for potentiometric position sensors and method for adjusting the parameters

Transducteur de mesure pour capteurs de position potentiométriques et procédé de réglage des paramètres

(84) Benannte Vertragsstaaten:
**DE ES FR GB IT**

(30) Priorität: **19.05.2000 DE 10024716**

(43) Veröffentlichungstag der Anmeldung:
**21.11.2001 Patentblatt 2001/47**

(73) Patentinhaber: **ASM AUTOMATION, SENSORIK, MESSTECHNIK GMBH**
**D-85452 Moosinning (DE)**

(72) Erfinder:
• **Steinich, Klaus-Manfred**
**85604 Poering-Zorneding (DE)**

• **Wirth, Peter**
**85386 Eching (DE)**

(74) Vertreter: **Alber, Norbert, Dipl.-Ing. et al**
**Patentanwalt**
**Albert-Rosshaupter-Strasse 65**
**81369 München (DE)**

(56) Entgegenhaltungen:
**EP-A- 0 514 634     US-A- 3 978 471**
**US-A- 4 461 182**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Messumformer zur Ausgabe einer normierten Ausgangsspannung, insbesondere für Winkelsensoren und Messseil-Positionssensoren, und ein Verfahren zum Einstellen von Nullpunkt und Verstärkung der Ausgangslinie desselben gemäß dem Oberbegriff der Ansprüche 1 und 10.

Potentiometrische Positions- und Winkelsensoren haben in der Regel ein Präzisionspotentiometer als Sensorelement, dessen Ausgangsspannung eine Funktion der Schleiferstellung ist. Dabei kann der mechanische Arbeitsbereich des Potentiometers wegen mechanischer Toleranzen oder bestimmter Messanwendungen üblicherweise nicht vollständig bis zu den beiderseitigen Endanschlägen des Schleifers ausgenutzt werden. Die Ausgangsspannung des Potentiometers

$$U(x) = x \cdot U_{ref}; \qquad \text{mit } x_0 < x < x_1 \qquad (1)$$

liegt im Idealfall zwischen den Endwerten $U(x_0) = 0$ V und $U(x_1) = $ Uref. Wegen der oben angegebenen Problematik ist jedoch die Ausgangsspannung des Potentiometers $U(x_0)$ in der Regel größer als 0 V und $U(x_1)$ kleiner als Uref. Uref ist dabei die Spannung einer Referenzspannungsquelle mit ausreichender Genauigkeit und Stabilität.

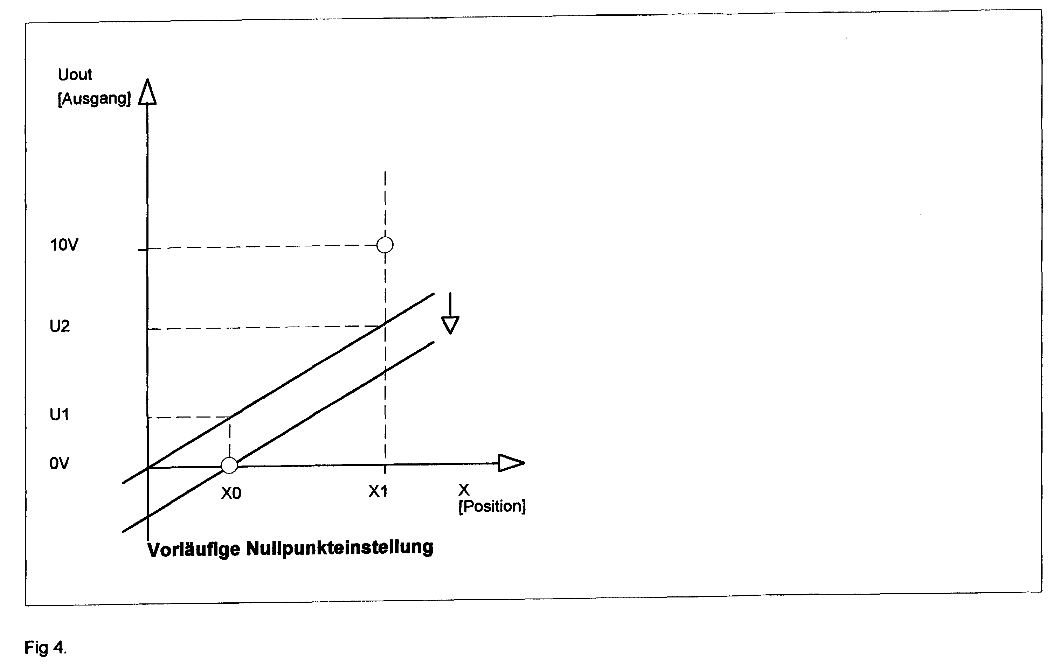

Fig. 4 zeigt eine typische Potentiometer-Ausgangskennlinie, die an der unteren Endposition $(x_0)$ des Potentiometer-Arbeitsbereichs eine Ausgangsspannung $(U_1)$ und an der oberen Endposition $(x_1)$ des Potentiometer-Arbeitsbereichs eine Ausgangsspannung $(U_2)$ aufweist.

Aufgabe des Messumformers ist es, eine für die Weiterverarbeitung durch Folgeschaltungen erforderliche normierte Ausgangsspannung, vorzugsweise zwischen 0 V und 10 V, bereitzustellen, das heißt die in Fig. 4 dargestellte Ausgangskennlinie so zu verdrehen und zu verschieben, daß sie an der jeweiligen Schleifer-Endposition $(x_0, x_1)$ die normierten Ausgangswerte, vorzugsweise 0 V und 10 V, aufweist. Zu diesem Zweck muß die Ausgangsspannung des Potentiometers in der Form

$$Uout(x) = Uref \cdot a \cdot (x-b) \qquad (2)$$

oder

$$Uout(x) = Uref \cdot (a' \cdot x - b') \qquad (3)$$

skaliert werden. Die Skalierung erfolgt mit Hilfe geeignet gewählter Parameter a (Verstärkung) und b (Nullpunktkorrektur), wobei die vom Sensorelement ausgegebene Spannung derart verstärkt und verschoben wird, dass eine normierte Ausgangsspannung von 0 V bis Uref, z. B. 10 V, entsteht.

In der Regel wird die Sensorspannung mit Hilfe einer Ausgangstreiberstufe gepuffert oder auf Strom-Ausgangssignale zwischen 4 - 20 mA abgebildet.

Es ist bekannt, die Einstellung der Parameter zur Nullpunktkorrektur und Verstärkung mit Hilfe zusätzlicher Trimmpotentiometer bei der Endmontage des Sensors durchzuführen.

Aus der EP 0 514 634 A1 ist ein Verfahren bekannt, bei dem Parameter einer Korrekturgleichung zur Korrektur von Messfehlern durch die Ermittlung von Soll- und Istwerten an einem Messnormal bestimmt werden. Mit diesem Verfahren ist es jedoch nicht möglich, eine Einstellung von Parametern durch das Trimmen von Messwerten zu erreichen.

In der US 4,461,182 wird ein Verfahren offenbart, bei dem eine Einstellung des Nullpunkts eines Verstärkers mit Hilfe eines Schaltkreises aus einem Operationsverstärker und einem Indikator erfolgt. Die Bereitstellung einer normierten Ausgangspannung eines Messumformers wird hier nicht beschrieben.

Das Dokument US 3,978,471 wiederum beschreibt die Verwendung eines Integratorschaltkreises in einem digitalen Thermometer. Hier werden an den Eingang des Integratorschaltkreises für variable Zeitdauern verschiedene Spannungen gelegt werden, um auf diese Art und Weise die ansonsten notwendige Verwendung einer hochpräzisen Spannungsquelle zu umgehen. Auch hier wird jedoch nicht auf die Einstellung der Parameter zur Nullpunktkorrektur und Verstärkung eines Messumformers eingegangen.

Andere Skalierverfahren sehen eine Analog-/Digitalwandlung mit numerischer Skalierung der digitalisierten Größen und anschließender Digital-/Analogwandlung vor. Diese Vorgehensweise hat jedoch den Nachteil, dass durch Diskretisierung des Zeit- und Ausgangswertebereichs sowie Rundungs- und Diskretisierungsfehler ein Informationsverlust und dadurch Ungenauigkeiten auftreten können.

Es ist daher die Aufgabe der vorliegenden Erfindung, einen Messumformer und ein entsprechendes Verfahren zu dessen Parametrisierung zu schaffen, der rein analog arbeitet und keine zusätzlichen Trimmpotentiometer zur Einstellung der Parameter erfordert.

Gelöst wird diese Aufgabe durch die in den unabhängigen Ansprüchen 1 und 10 angegebenen Merkmale. Weitere Ausführungsformen ergeben sich aus den abhängigen Ansprüchen.

Der erfindungsgemäße Messumformer umfasst einen Integrator, dessen Ausgang über einen Schalter mit dem Eingang eines Halteglieds verbunden ist. Dem Eingang des Integrators werden die Ausgangsspannung des Sensors, beispielsweise eines Potentiometers, eine Referenzspannung und die Ausgangsspannung des Integrators oder eine davon abgeleitete Spannung über Schalter zugeführt, wobei vorzugsweise jede Eingangsspannung an einem jeweils eigenen zugeordneten Schalter anliegt.

Eine Steuerung - vorzugsweise ein Mikrokontroller - betätigt die Schalter derart, daß die Ausgangsspannung des Potentiometers für ein vorbestimmtes erstes Zeitintervall, die Referenzspannung für ein vorbestimmtes zweites Zeitintervall und die Ausgangsspannung des Integrators bzw. Halteglieds für ein vorbestimmtes drittes Zeitintervall T durchgeschaltet werden. Durch Steuerung des Mikrokontrollers wird anschließend der vierte Schalter betätigt und dem Eingang des Halteglieds die Ausgangsspannung des Integrators für ein vorbestimmtes viertes Zeitintervall zugeführt.

Die erforderlichen Skalierparameter sind vorzugsweise in einem nicht-flüchtigen Speicher gespeichert, der entweder ein Festspeicher oder ein batteriegepufferter flüchtiger Speicher sein kann.

Für den Integrator mit einer Integrationszeitkonstante $\tau = RC$ über die Zeitintervalle t1, t2 und T ergibt sich die Ausgangsspannung des Integrators mit

$$U_{out_1} = U_{out_0} - \int_{t0}^{t1} (U_{in}(x) / \tau)dt - \int_{t0}^{t2} (- U_{ref} / \tau)dt - \int_{t0}^{T} (U_{out_{t0}} / \tau)dt; \qquad (4),$$

wobei $U_{out_0}$ und $U_{out_1}$ die Integrationsausgangsspannung vor bzw. nach einem Meßzyklus ist.

Daraus ergibt sich die Differenzengleichung

$$U_{out_{i+1}} = U_{out_i} - U_{in}(x) \cdot t1 / \tau + U_{ref} \cdot t2/ t - U_{out_i} \cdot T / \tau \qquad (5)$$

und für den eingeschwungenen Zustand mit

$$U_{out_{i+1}} = U_{out_i} = U_{out}(x) \qquad (6)$$

ergibt sich

$$U_{out}(x) = U_{ref} \cdot (- x \cdot t1/T + t2/T). \qquad (7)$$

Aus dem Verhältnis der Integrationszeitintervalle zueinander bestimmen sich die Verstärkung a' aus Gleichung (3) mit t1/T und die Nullpunktkorrektur b' mit t2/T. Dabei ist T das Zeitintervall, mit dem die rückgeführte Ausgangsgröße in das Integral eingeht. Die Skalierparameter ergeben sich somit aus ihrer zeitlichen Gewichtung bezüglich des Zeitintervalls T.

Die Länge der Zeitintervalle t1, t2, T wird von einer programmierbaren Steuerung, vorzugsweise einem Mikrokontroller, bestimmt. Es wurde festgestellt, daß dieses rekursive System innerhalb eines Abtastzyklus T optimal einschwingt, wenn die Integrationszeitkonstante $\tau$=T festgelegt wird. Toleranzen durch Streuung der Kondensatoren können daher mittels Anpassung des Abtastzyklus an das aktuelle $\tau'$ durch Setzen von T' = $\tau'$ ausgeglichen werden.

Die Einstellung der Zeitintervalle t1, t2, T erfolgt vorzugsweise unter Kontrolle einer mit der Steuerung über deren Programmierschnittstelle verbundenen Testeinheit (Prüffeldrechner), an der für bestimmte Messpositionen des Sensors die Trimmung des Ausgangssignals des Messumformers auf vorgegebene Werte durchgeführt wird, indem die Skalierparameter t1, t2, T entsprechend eingestellt werden. Die Parametrisierung des Systems und damit die Einstellung von Nullpunkt und Verstärkung der Ausgangskennlinie des Sensors kann an mehreren Messpunkten im Messbereich des Sensors durchgeführt werden. Vorzugsweise wird die Parametrisierung jedoch nur an zwei Messpositionen des Sensors vorgenommen, wobei der Sensor vorzugsweise nur einmal von der ersten Messposition in die zweite Messposition verfahren wird.

Nachstehend wird ein erfindungsgemäßes Verfahren zur Parametrisierung beschrieben, bei dem zunächst die Nullpunktkorrektur und anschließend die Verstärkung eingestellt wird. (Die umgekehrte Vorgehensweise ist ebenfalls möglich).

Hierzu werden zunächst die Skalierparameter t1, t2, T in eine definierte Grundstellung gebracht, z.B. t1=1, t2=0, T=Konst. Der Sensor wird in eine erste Messposition, vorzugsweise die Anfangsposition ($x=x_0$), gefahren und es wird die Ausgangsspannung des Sensors an diesem Punkt gemessen.

An diesem Messpunkt hat die Ausgangsgröße des Sensors aus den eingangs genannten Gründen üblicherweise nicht den gewünschten normierten Wert (0 V), sondern einen davon abweichenden Wert. Dieser abweichende Wert wird durch Variieren des ersten Skalierparameters auf den gewünschten normierten Wert (0 V) getrimmt, indem ein Schalter des Messumformers für eine vorgegebene Zeitspanne innerhalb eines Integrationszeitintervalls geschlossen und diese Zeitspanne schrittweise geändert wird. Der Trimmvorgang wird solange durchgeführt, bis die Ausgangsgröße gleich 0 V oder nahe 0 V ist. Die Ausgangsgröße Uout(x) kann auf einen Wert eingestellt werden, der geringfügig kleiner als 0 V ist, um die spätere Verschiebung dieses Punktes bei der Skalierung der Verstärkung zu berücksichtigen.

Danach wird der Sensor in eine zweite Messposition ($x=x_1$) verfahren und die zugehörige Ausgangsgröße (Uout(x1)) gemessen. Die eingestellte Position entspricht vorzugsweise der Messbereichs-Endposition des Sensors, an der die Ausgangsgröße des Sensors einen vorgegebenen zweiten Wert (10 V) aufweisen soll.

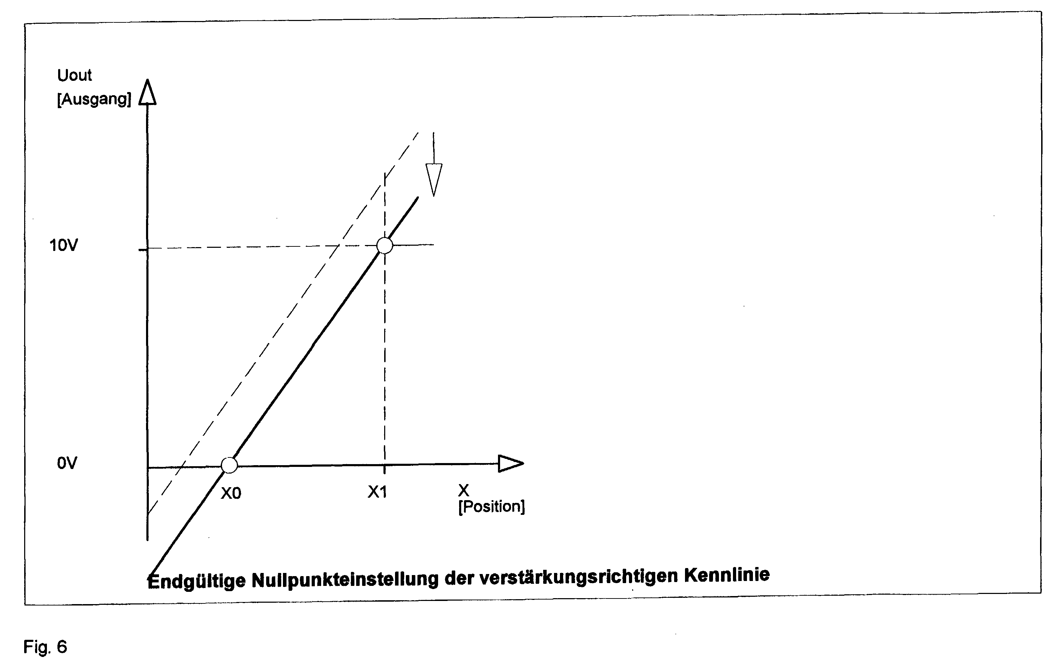

Die Abweichung vom gemessenen zum einzustellenden Wert wird durch Trimmen eines zweiten Skalierparameters ausgeglichen, der ebenfalls ein Zeitparameter ist und angibt, wie lange ein zweiter Schalter des Integrators geschlossen wird. Auf diese Weise wird die Steigung der Sensorkennlinie eingestellt, so daß die Ausgangskennlinie durch die beiden Punkte x0 und x1 bei 0 V bzw. 10 V verläuft (Fig. 6).

In einem anderen Verfahren wird zunächst die Ausgangsgröße des Sensors vorzugsweise an der Anfangs- und Endposition des Arbeitsbereichs gemessen und ein Skalierungsfaktor aus dem Verhältnis von einzustellendem zu gemessenem Ausgangswertebereich berechnet. Dabei ist der Skalierungsfaktor

$$k = U_M (x1) / (Uout(x1) - Uout(x0)) \qquad (8)$$

wobei $U_M(x1)$ die an der Messbereichs-Endposition nach erfolgter Parametrisierung gewünschte normierte Ausgangsspannung (vorzugsweise 10 V) ist.

Der berechnete Wert wird vorzugsweise an der Messbereichs-Endposition durch Variieren einer ersten Zeitkonstante eingestellt (Einstellen der Verstärkung), wobei gilt

$$U(x1) = U_M (x1) / Uout(x0) \cdot (1-k) \qquad (9)$$

Der Sensor wird anschließend auf die Messbereichs-Anfangsposition ($x=x0$) zurückgefahren und ein zweiter Skalierparameter solange verringert bzw. vergrößert, bis die Ausgangsspannung Null ist (Einstellung des Nullpunkts).

Anstatt die Einstellung von Nullpunkt und Verstärkung an den Messbereichs-Endpositionen durchzuführen, kann die Linearität und Empfindlichkeit (1-k) und damit auch der erforderliche Skalierungsfaktor k in einer vorgegebenen Anzahl von Sensor-Messschritten, die vorzugsweise nur in einer Richtung entlang des Sensor-Arbeitsbereichs liegen, ermittelt werden.

Die Einstellung der Zeitparameter für Nullpunkt und Verstärkung der Kennlinie kann auch mit Hilfe eines automatisierten Messplatzes (der ein automatisches Verfahren des Sensors ermöglicht) und damit ohne Bedieneingriff durchgeführt werden. Mit Hilfe zusätzlicher Komparatoren, die an den verschiedenen Messpunkten jeweils die gewünschte normierte Spannung mit der gemessenen Ausgangsspannung vergleichen, ist darüber hinaus ein Selbstabgleich des Sensors möglich.

Die Trimmgenauigkeit wird dabei durch die Taktrate des Mikrokontrollers vorgegeben. Bei einer Auflösung des Mikrokontrollers von 12 Bit und einer normierten Spannung von 10 V ergibt sich eine Schrittweite von 2,5 mV (10 V/4000). Um die Schrittweite weiter zu verringern, ohne die Taktrate des Mikrokontrollers erhöhen zu müssen, wird dem Messumformer vorzugsweise eine Ausgangsstufe nachgeschaltet, die die unskalierte Ausgangsspannung des Positionspotentiometers Upot(x) und die skalierte Ausgangsspannung des Haltegliedes in einer vorbestimmten Gewichtung addiert, so daß sich eine Ausgangsspannung zu

$$Uscal(x) = Upot(x) * g1 + Uout(x) * g2 \qquad (10)$$

ergibt.

Das Verhältnis von g1 zu g2 beträgt z. B. 4:1. Damit erhöht sich die Trimmgenauigkeit (Verringern der Trimmschrittweite) des Ausgangssignals Uscal um den Faktor 4. Da bei o. g. potentiometrischen Sensoren der Verstellbereich des Positionspotentiometers zu mindestens 75% genutzt wird, genügt ein eingeschränkter Trimmbereich von 25%, um die auftretenden Kennlinien zu korrigieren.

Der erfindungsgemäße Messumformer hat außerdem den Vorteil, daß der Wert der Taktfrequenz des Mikrokontrollers in die Ausgangsfunktion (7) nicht mit eingeht, da in den Gewichtungstermen dieser Funktion nur Zeitverhältnisse t/T entalten sind. Nur die Kurzzeitkonstant der Taktquelle über den Bereich des Integraionsyklus von z.B. 500 Mikrosekunden geht als Fehler ein. Anstelle eines Quarzes kann ein kostengünstiger Keramikresonator oder RC-Schwingkreis eingesetzt werden.

Da die Ausgangsspannung des Halteglieds an den Eingang des Integrators zurückgeführt und durch Aufschaltung auf den Summenpunkt des Integrators mit der Eingangsgröße verglichen und nachgeführt wird, gehen Bauelementetoleranzen und Fehler des Integrators nicht in den eingeschwungenen Zustand der Ausgangsgröße ein. Es können daher Integrationskondensatoren mit großen Kapazitätstoleranzen (10%) und Leckströmen eingesetzt werden. Auch die spannungsabhängige Nichtlinearität des Integrationskondensators geht nicht in den verstärkenden Term t1/T ein, da sie durch die Rückführung des Ausgangssignals ausgeglichen wird.

In den Term t2/T zur Nullpunktkorrektur geht die Spannungsnichtlinearität des Integrationskondensators zwar ein, sie wird jedoch bei der nachfolgenden Einstellung der Nullpunktkorrektur berücksichtigt und kompensiert. Der Integrationskondensator darf somit große Kapazitätstoleranzen, Spannungsnichtlinearität und Leckströme aufweisen, wobei lediglich die Temperaturstabilität gewährleistet sein sollte.

Zur Verbesserung der Trimmgenauigkeit können iterativ weitere Skalierzyklen durchgeführt werden.

Die Erfindung wird nachstehend beispielhaft anhand der beigefügten Zeichnungen näher erläutert. Es zeigen:

Fig. 1 Ein schematisches Schaltbild eines erfindungsgemäßen Messumformers mit nachgeschalteter Ausgangsstufe;

Fig. 2 den Signalverlauf der Skalierparameter und der Ausgangsspannung des erfindungsgemäßen Messumformers von Fig. 1;

Fig. 3 den Verlauf der Eingangs- und Ausgangsspannung des erfindungsgemäßen Messumfanges der Ausgangskennlinie;

Fig. 4 ein Diagramm zur Veranschaulichung der Einstellung des Nullpunkts;

Fig. 5 ein Diagramm zur Veranschaulichung der Einstellung der Steigung der Ausgangskennlinie, und

Fig. 6 die endgültige Nullpunkteinstellung der verstärkungsrichtigen Kennlinie.

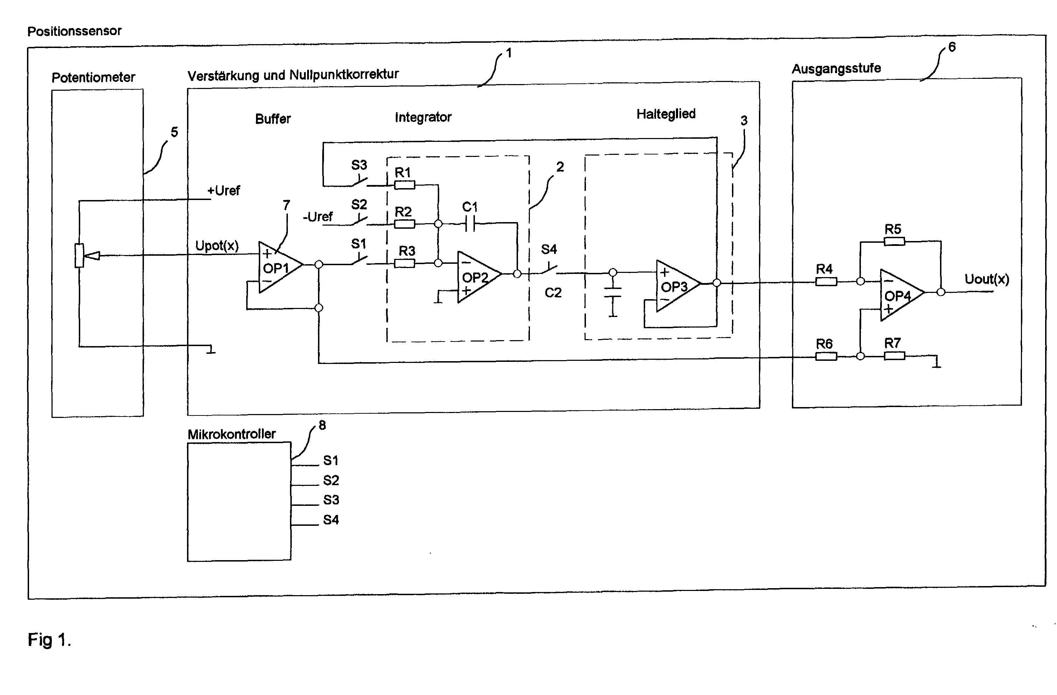

Der in Fig. 1 dargestellte Messumformer 1 bildet die Ausgangskennlinie eines Potentiometers derart ab, daß sie anschließend durch vorgegebene normierte Punkte (x0, x1, Fig. 6) verläuft. Die Einstellung von Nullpunkt und Verstärkung des Messumformers erfolgt dabei durch Kalibrieren von Zeitparametem t1, t2, T, mit denen zugeordnete Schalter S1, S2, S3 des Messumformers 1 geschlossen bzw. geöffnet werden.

Der in Fig. 1 dargestellte Messumformer umfasst einen Integrator 2, an dessen Eingang Schalter S1, S2, S3 vorgesehen sind. Der Integrator 2 ist in bekannter Weise aufgebaut und umfaßt einen Integrationsverstärkem OP2 und einen Integrationskondensator C1. Der Eingang des Integrators hat einen Addierknoten, an dem die über die Schalter S1, S2, S3 zugeführten Spannungen addiert werden.

Der Ausgang des Integrators 2 ist über einen Schalter S4 mit einem Halteglied 3 verbunden. Das Halteglied dient dazu, den am Eingang anliegenden Spannungswert bis zum nächsten Messzyklus zu speichern. Das Halteglied umfasst einen Operationsverstärker OP3 und eine parallel zu dessen Eingang geschaltete Kapazität C2.

Am Eingang des Integrators 2 ist die Ausgangsspannung Upot (x) des Potentiometers 5 über den ersten Schalter S1, die (negative) Referenzspannung Uref über den zweiten Schalter S2 und die Ausgangsspannung des Integrators 2 bzw. des Halvegliedes 3 über den dritten Schalter S3 zugeführt.

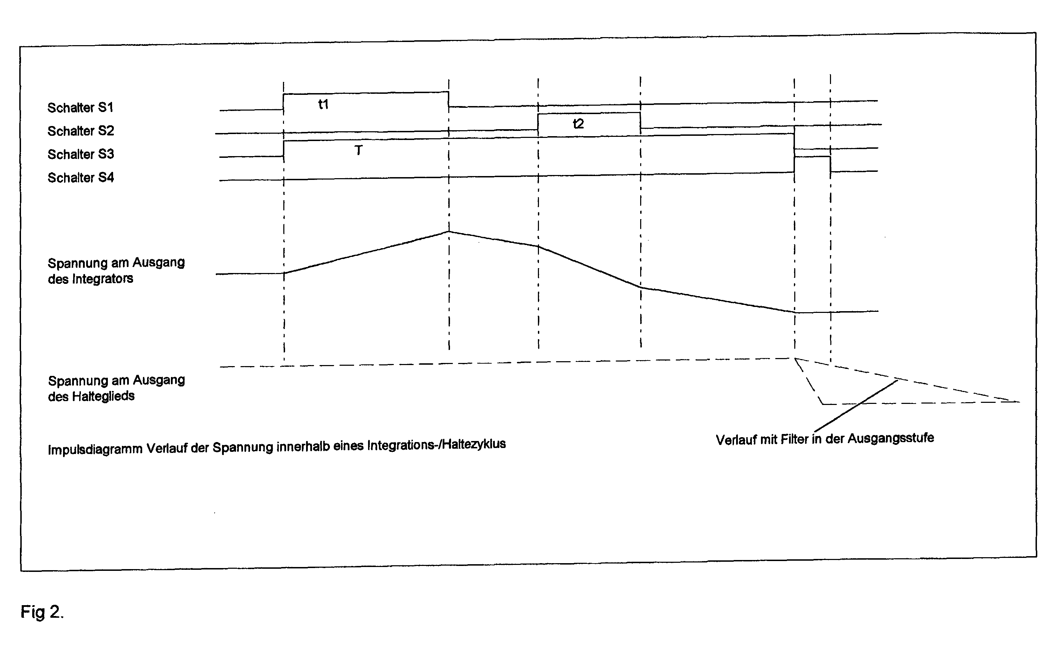

Wie in Fig. 2 gezeigt ist, sind während des Zeitintervalls, t =[t0,t1] die Schalter S1 und S3 geschlossen, so daß die Ausgangsspannung Upot(x) des Potentiometers 5 über einen Spannungsfolger 7 auf den Eingang des Integrators 2 geführt ist. Die Eingangsspannungen des Integrators können dabei über Widerstände R1, R2, R3 gewichtet werden.

Der Schalter S3 ist während des Zeitintervalls t = [t0, T] geschlossen, so daß die Spannung Uout(x) auf den Eingang des Integrators 2 rückgeführt und durchgeschaltet ist.

Der zweite Schalter S2 ist während des Zeitintervalls t = [T/2, T/2 + t2] geschlossen und somit -Uref auf den Eingang des Integrators 2 geführt (Subtrahieren des Nullpunktkorrekturwertes).

Nach Ablauf eines solchen Messzyklus wird der am Ausgang des Integrators anliegende Spannungswert durch Schließen des Schalters S4 über eine Zeitdauer t4 an das Halteglied 3 weitergegeben. Dadurch ergibt sich der in Fig. 2 strichliert dargestellte stufenförmige Spannungsverlauf am Ausgang des Haltegliedes 3. In der beschriebenen Darstellung liegen die Schließ-Zeitintervalle t1, t2, der Schalter S1, S2 zeitlich nacheinander. Sie können jedoch auch einander überlagern, so daß z. B. S1 und S2 gleichzeitig geschlossen und später zu den verschiedenen Zeitpunkten t1, t2 geöffnet werden. Dies hat den Vorteil, daß das Integrationsintervall kürzer und damit die Integrations-Wiederholrate erhöht werden kann.

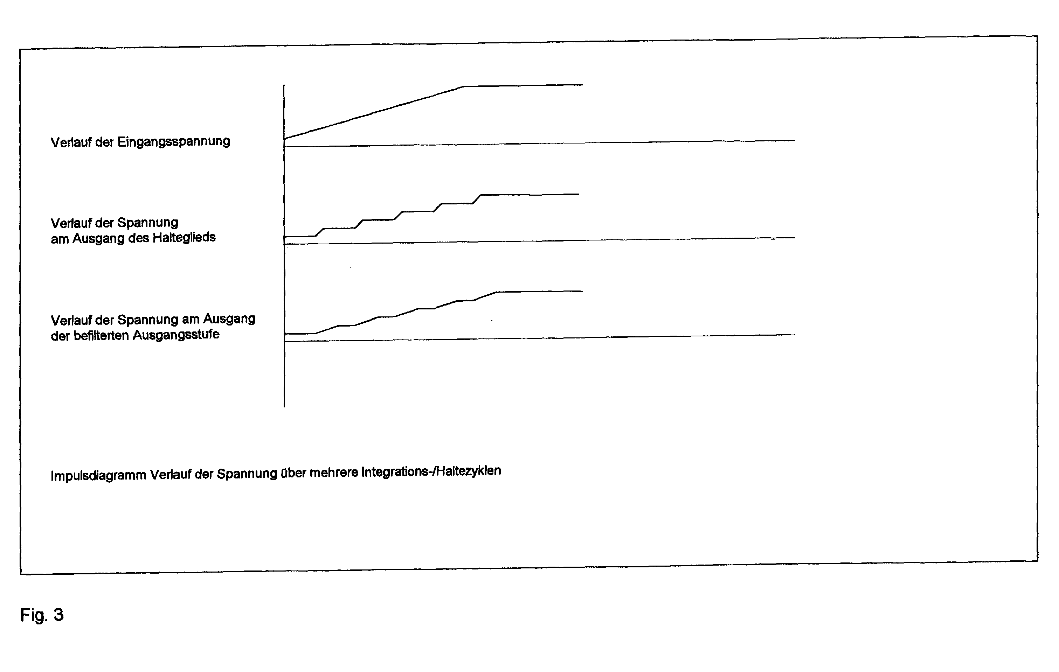

Dem Halteglied 3 ist vorzugsweise eine Tiefpass-Filterstufe (nicht gezeigt) nachgeschaltet, die die mit der Abtastrate auftretenden zyklischen, stufenförmigen Spannungsübergänge abschwächt. Alternativ kann auch eine Bandpass-Filterstufe vorgesehen sein. Die Filterstufe kann auch Bestandteil einer Ausgangstreiberstufe 6 sein, die dem Halteglied 3 nachgeschaltet ist. Dabei ergibt sich der in Fig. 3 unten gezeigte Spannungsverlauf mit geglätteten Stufenübergängen.

Bei der Ausführungsform gemäß Fig. 1 umfasst die Ausgangsstufe 6 einen üblichen Subtrahierer, der im vorliegenden Fall jedoch als Addierer arbeitet, da der Integrator 2 invertierend wirkt. Der Subtrahierer OP 4 umfasst Widerstände R4, R5, R6, R7 in üblicher Anordnung.

Am Eingang der Ausgangsstufe 6 sind die unskalierte Potentiometerausgangsspannung Uout und die skalierte Ausgangsspannung des Halteglieds 3 zugeführt, wobei die Spannungen vorzugsweise mit einer Gewichtung von 4:1 auf die Ausgangsstufe 6 aufgeschaltet sind. Dies erlaubt, wie bereits beschrieben wurde, die volle Auflösung des Mikrokontrollers nur auf den im Skalierpfad geführten Teil des Wertebereichs (in diesem Fall 0 - 2,5 V) anzuwenden. Die Schrittweite kann somit verringert und die Trimmgenauigkeit erhöht werden. Die skalierte und auf den gewünschten Wertebereich von 0 V-10 V normierte Ausgangsspannung wird schließlich am Ausgang der Ausgangsstufe 6 bereitgestellt.

Bei Betrieb des Messsystems wird die Länge der Zeitintervalle t1, t2, T, nachdem sie passend kalibriert wurden, von der programmierbaren Steuerung (Mikrocontroller 8) automatisch gesteuert.

Die Kalibrierung kann auch automatisch erfolgen, wenn die jeweiligen Ausgangsspannungen bei Null- und Maximalstellung des Arbeitsbereichs über Komparatoren ermittelt und dem Mikrocontroller zugeführt werden.

Die Werte der Zeitparameter t1, t2, T sind vorzugsweise in einem nichtflüchtigen reprogrammierbaren Speicher (nicht gezeigt) im Mikrocontroller 8 abgelegt.

Fig. 4 zeigt eine nicht-skalierte, durch den Nullpunkt laufende Kennlinie, bei der die Ausgangsspannung des Potentiometers 5 am unteren Anschlag des Arbeitsbereichs einen Wert U1 und am oberen Endanschlag des Arbeitsbereichs einen Wert U2 aufweist, die ungleich Null bzw. 10 V sind. Diese nicht-skalierte Kennlinie wird durch Kalibrieren des Zeitintervalls t2 nach unten verschoben, bis sie am Messpunkt x0 den Wert 0 V aufweist.

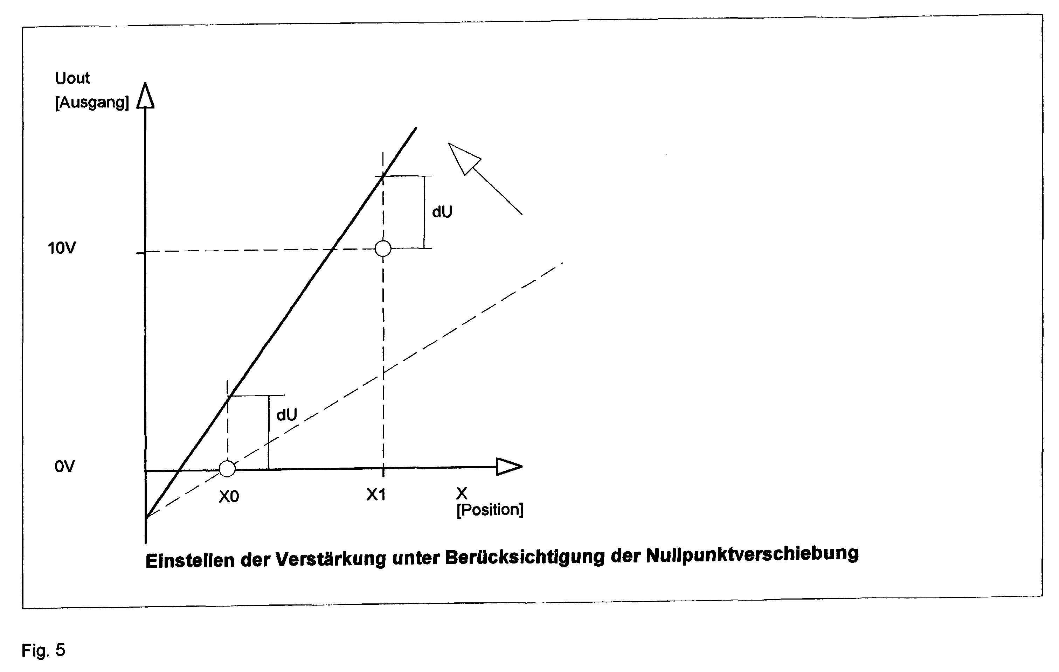

Fig. 5 zeigt die Kalibrierung der Verstärkung an der Endposition $X_1$ des Arbeitsbereichs des Sensors 5. An dieser Endposition $X_1$ wird die Ausgangsgröße Uout von Uout($x_1$)auf einen berechneten Wert getrimmt, indem das Zeitintervall t1 kalibriert wird. Der Wert der Ausgangsgröße Uout($x_1$) ist dabei so berechnet, dass die resultierende Kennlinie im wesentlichen die gleiche Steigung wie die gewünschte normierte Kennlinie hat.

Fig. 6 zeigt schließlich einen dritten Schritt des Parametrierverfahrens, bei dem durch nochmaliges Kalibrieren des Zeitintervalls t2 der Nulldurchgang in den Punkt x0 gelegt und damit die Kennlinie auf die gewünschte normierte Kennlinie abgebildet wird.

**Patentansprüche**

**1.** Messumformer zum Einstellen von Nullpunkt und Verstärkung der Ausgangskennlinie eines Sensors, insbesondere für Winkel- und Messseil-Positionssensoren,
   **gekennzeichnet durch**

- einen Integrator (2), dessen Ausgang über einen Schalter (S4) mit dem Eingang eines Halteglieds (3) verbunden ist, wobei
   am Eingang des Integrators (2) die Ausgangsspannung ($U_{pot}$) des Sensors (5), eine Referenzspannung ($U_{ref}$) und die Ausgangsspannung des Halteglieds (3) anliegen, die über Schalter (S1-S3) zugeführt sind,
- eine Steuerung (8) zum Betätigen der Schalter (S1-S4), so dass die Ausgangsspannung ($U_{pot}$) des Sensors (5) ein vorbestimmtes erstes Zeitintervall (t1), die Referenzspannung ($U_{ref}$) ein vorbestimmtes zweites Zeitintervall (t2) und die Ausgangsspannung ($U_{out}$) des Halteglieds (3) ein vorbestimmtes drittes Zeitintervall (T) am Eingang des Integrators (2) durchgeschaltet werden, und
- die Steuerung den Schalter (S4) derart betätigt, dass die Ausgangsspannung des Integrators (2) dem Halteglied (3) für ein vorbestimmtes viertes Zeitintervall (t4) zugeführt wird.

2. Messumformer nach Anspruch 1,
   **dadurch gekennzeichnet, daß**
   die Schalter (S1-S3) einen ersten Schalter (S1), an dem die Ausgangsspannung ($U_{pot}$) des Sensors (5), einen zweiten Schalter (S2), an dem die Referenzspannung ($U_{ref}$), und einen dritten Schalter, an dem die Ausgangs-spannung ($U_{out}$) des Halteglieds (3) anliegt, umfassen.

3. Messumformer nach Anspruch 1 oder 2,
   **dadurch gekennzeichnet, daß**
   ein nicht-flüchtiger Speicher zum Speichern der Skalierwerte (t1-t4) und weiterer Parameter vorgesehen ist.

4. Messumformer nach Anspruch 1, 2 oder 3,
   **dadurch gekennzeichnet, daß**
   der Sensor ein Potentiometer (5) ist.

5. Messumformer nach einem der vorhergehenden Ansprüche,
   **dadurch gekennzeichnet, daß**
   ein Intervall (T) als Integrationszeitkonstante des Integrators (2) gewählt ist.

6. Messumformer nach einem der vorhergehenden Ansprüche,
   **dadurch gekennzeichnet, daß**
   das Halteglied einen Spannungsfolger (OP3) und eine parallel zu dessen Eingang geschaltete Kapazität (C2) umfasst.

7. Messumformer nach einem der vorhergehenden Ansprüche,
   **dadurch gekennzeichnet, daß**
   zwischen dem Sensorausgang und dem Eingang des Integrators (2) ein Spannungsfolger (OP1) vorgesehen ist.

8. Messumformer nach einem der vorhergehenden Ansprüche,
   **dadurch gekennzeichnet, daß**
   dem Halteglied (3) eine Ausgangsstufe (6) nachgeschaltet ist, die die Ausgangsspannung ($U_{out}$) des Halteglieds (3) verstärkt und an ihrem Ausgang die gewünschte skalierte Ausgangsspannung ($U_{skal}$) bereitstellt.

9. Messumformer nach Anspruch 8,
   **dadurch gekennzeichnet, daß**
   die Ausgangsstufe (6) einen Subtrahierer (OP4) bzw. Addierer umfasst, an dessen Eingang die Ausgangsspan-nung ($U_{out}$) des Halteglieds (3) und die Ausgangsspannung ($U_{pot}$) des Sensors anliegen.

10. Verfahren zum Einstellen von Nullpunkt und Verstärkung der Ausgangskennlinie eines Sensors, insbesondere eines Winkel- und Messseil-Positionssensors, mit einem Integrator (2), dessen Ausgang über einen Schalter (S4) mit dem Eingang eines Halteglieds (3) verbunden ist, wobei am Eingang des Integrators (2) die Ausgangsspannung ($U_{pot}$) des Sensors (5), eine Referenzspannung ($U_{ref}$) und die Ausgangsspannung des Halteglieds (3) anliegen, die über Schalter (S1-S3) zugeführt sind, beinhaltend die folgende Schritten:

    - Setzen von zeitlichen Skalierparametern (Zeitintervall t1, t2, T), in eine definierte Grundstellung;
    - Stellen des Sensors in eine erste Position (x = x0);
    - Messen der Ausgangsgröße ($U_{out}(x0)$);
    - Trimmen der Ausgangsgröße ($U_{out}(x0)$) auf einen vorgegebenen ersten Wert ($U_{out(x0) \approx 0}$), indem ein erster der Skalierparameter (t2) kalibriert wird ;
    - Stellen des Sensors (5) in eine zweite Position (x = x1);
    - Messen der Ausgangsgröße ($Uo_{ut(x1)}$);
    - Trimmen der Ausgangsgröße ($U_{out(x1)}$) auf einen vorgegebenen zweiten Wert, indem ein zweiter der Skalierparameter (t1) kalibriert wird.

11. Verfahren nach Anspruch 10,
    **dadurch gekennzeichnet, daß**
    die erste Position des Sensors (5) eine Anfangsposition (x=x0) und die zweite Position eine Endposition (x=x1) des Arbeitsbereichs des Sensors ist.

**12.** Verfahren nach Anspruch 10 oder 11,
**dadurch gekennzeichnet, daß**
mit dem ersten Zeitintervall (t1) die Verstärkung und mit dem zweiten Zeitintervall (t2) die Nullpunktkorrektur der Ausgangskennlinie des Sensors eingestellt wird.

**13.** Verfahren nach einem der Ansprüche 10 bis 12,
**dadurch gekennzeichnet, daß**
zuerst die Nullpunktkorrektur und anschließend die Verstärkung eingestellt wird.

**14.** Verfahren nach einem der Ansprüche 10 bis 13,
**dadurch gekennzeichnet, daß**
in einem dritten Kalibrierschritt nochmals die Nullpunktkorrektur durchgeführt wird.

**15.** Verfahren nach einem der Ansprüche 10 bis 14,
**dadurch gekennzeichnet, daß**
die Einstellung von Verstärkung und Nullpunktkorrektur an zwei verschiedenen Messpositionen des Sensors (5) erfolgt, wobei der Sensor nur einmal zwischen den beiden Messpositionen (x0, x1) verfahren wird.

**16.** Verfahren nach einem der Ansprüche 10 bis 15,
**dadurch gekennzeichnet, daß**
die Einstellung von Verstärkung und Nullpunktkorrektur an mehreren Meßpositionen ($x0$, $x_1$) in nur einer Richtung der Messgröße (x) erfolgt.

**17.** Verfahren nach einem der Ansprüche 10 bis 16,
**dadurch gekennzeichnet, daß**
sich die Schließ-Zeitintervalle (t1, t2) der Schalter (S1, S2) zeitlich einander überlagern.

## Claims

**1.** Measuring transducer for setting zero point and amplifying the output characteristic of a sensor, in particular for angular sensors and measuring cable position sensors, **characterised by**

- an integrator (2) whose output side is connected to a holding member (3) by way of a switch (S4), wherein at the input of the integrator (2) is conducted the output voltage (Upot) of the sensor (5), a reference voltage (Uref) and the output voltage of the holding member (3), which are applied by way of switches (S1 - S3),
- a control means (8) to actuate the switches (S1 - S4) thus that the output voltage (Upot) of the sensor (5) is conducted to the input of the integrator (2) for a first predetermined time interval (t1), the reference voltage (Uref) for a second predetermined time interval (t2) while the output voltage (Uout) of the holding member (3) for a third predetermined time interval (T), and
- and **characterised in that** the switch (S4) is actuated thus that the output voltage of the integrator (2) is applied to the holding member (3) for a fourth predetermined time interval (t4).

**2.** Measuring transducer according to claim 1, **characterised in that** the switches (S1 - S3) include a first switch (S1) for the output voltage (Upot) of the sensor (5), a second switch (S2) for the reference voltage (Uref) and a third switch for the output voltage (Uout) of the holding member (3).

**3.** Measuring transducer according to claim 1 or 2, **characterised in that** there is provided an non-erasable memory to store the scaling values (t1 - t4) and other parameters.

**4.** Measuring transducer according to claims 1, 2 or 3, **characterised in that** the sensor is a potentiometer (5).

**5.** Measuring transducer according to one of the preceding claims, **characterised in that** there is chosen an interval (T) as integration constant of the integrator (2).

**6.** Measuring transducer according to one of the preceding claims, **characterised in that** the holding member includes an operational amplifier (OP3) and a capacitor (C2) connected in parallel with the input thereof.

7. Measuring transducer according to one of the preceding claims, **characterised in that** between the output of the sensor and the input of the integrator (2) there is arranged an operational amplifier (OP1).

8. Measuring transducer according to one of the preceding claims, **characterised in that** at the output of the holding member (3) is connected an output stage (6) to amplify the output voltage (Uout) of the holding member (3) and setting the desired output scaled voltage (Uscal) at its output.

9. Measuring transducer according to claim 8, **characterised in that** the output stage (6) includes a subtracter (OP4) and an adder respectively, at which input is conducted the output voltage (Uout) of the holding member (3) and the output voltage (Upot) of the sensor.

10. Method for setting zero point and amplifying the output characteristic of a sensor, in particular for angular sensors and measuring cable position sensors, with an integrator (2) whose output side is connected to the input of a holding member (3) by way of a switch (54), wherein the output voltage (Upot) of the sensor (5), a reference voltage (Uref) and the output voltage of the holding member (3), applied by way of switches (S1 - S3), are conducted to the input of the integrator (2), comprising:

   - setting time scaling parameters (time intervals t1, t2, T) to a defined basic position;
   - placing the sensor at a first position (x = x0);
   - measuring the output value (Uout(x0));
   - trimming the output value (Uout(x0)) to a predetermined first value (Uout (x0) $\sim$ 0) by calibration of a first of the scaling parameters (t2);
   - placing the sensor (5) at a second position (x = x1);
   - measuring the output value (Uout(x1));
   - trimming the output value (Uout(x1)) to a predetermined second value by calibration of a second of the scaling parameters (t1).

11. Method according to claim 10, **characterised in that** the first position of the sensor (5) is an initial position (x = x0) of the working range of the sensor and the second position of the sensor is an end position (x = x1) of the working range of the sensor.

12. Method according to claim 10 or 11, **characterised in that** zero point correction is adjusted with the second time interval (t2) and amplification of the output characteristic of the sensor is adjusted with the first time interval (t1).

13. Method according to one of claims 10 to 12, **characterised in that** firstly zero point correction and then amplification are adjusted.

14. Method according to one of claims 10 to 13, **characterised in that** zero point correction is once again corrected by a third calibration step.

15. Method according to one of claims 10 to 14, **characterised in that** adjustment of amplification and zero point correction is effected at two different measurement positions of the sensor (5), wherein the sensor is moved only once between those two measurement points (x0, x1).

16. Method according to one of claims 10 to 15, **characterised in that** adjustment of amplification and zero point correction is effected at a plurality of measurement positions (x0, x1), in a single direction of the measurement values (x).

17. Method according to one of claims 10 to 16, **characterised in that** the closing time intervals (t1, t2) of switches (S1, S2) are in overlapping relationship in respect of time.

**Revendications**

1. Transducteur de mesure pour le réglage du point de zéro et de l'amplification de la caractéristique de sortie d'un senseur, spécialement pour les senseurs de position avec câble de mesure et angulaires, **caractérisé par**

- un intégrateur (2) dont la sortie est couplée par l'intermédiaire d'un contact (S4) avec l'entrée d'un élément de retenue (3), où à l'entrée de l'intégrateur (2) se trouve la tension de sortie (Upot) du senseur (5), une tension de référence (Uref) et la tension de sortie de l'élément de retenue (3), qui sont appliquées par les contacts (S1 - S3)

- une unité de commande (8) pour l'actionnement des contacts (S1 - S4), de sorte qu'à l'entrée de l'intégrateur (2) soit connectée la tension de sortie (Upot) du senseur (5) un premier intervalle de temps (t1) préétabli, la tension de référence (Uref) un second intervalle de temps (t2) préétabli et la tension de sortie (Uout) de l'élément de retenue (3) un troisième intervalle de temps (T) préétabli, et

- la commande du contact (S4) actionne de sorte que la tension de sortie de l'intégrateur (2) s'applique à l'élément de retenue (3) pour un quatrième intervalle de temps (t4) préétabli.

2. Transducteur de mesure selon la revendication 1, **caractérisé en ce que**, les contacts (S1 - S3) comprennent un premier contact (S1) pour la tension de sortie (Upot) du senseur (5), un second contact (S2) pour la tension de référence (Uref) et un troisième contact pour la tension de sortie (Uout) de l'élément de retenue (3).

3. Transducteur de mesure selon la revendication 1 ou 2, **caractérisé en ce qu'**on prévoit une mémoire non-volatile pour la mémorisation des valeurs de scalage (t1 - t4) et d'autres paramètres.

4. Transducteur de mesure selon la revendication 1, 2 ou 3, **caractérisé en ce que**, le senseur est un potentiomètre (5).

5. Transducteur de mesure selon l'une des revendications antérieures, **caractérisé en ce que**, un intervalle (T) est choisi comme constante d'intégration de l'intégrateur (2).

6. Transducteur de mesure selon l'une des revendications antérieures, **caractérisé en ce que**, l'élément de retenue comprend un répéteur de tension (OP3) et une capacité (C2) connectée en parallèle par rapport à l'entrée de celui-ci.

7. Transducteur de mesure selon l'une des revendications antérieures, **caractérisé en ce qu'**, entre la sortie du senseur et l'entrée de l'intégrateur (2) est prévu un répéteur de tension (OP1).

8. Transducteur de mesure selon l'une des revendications antérieures, **caractérisé en ce qu'**, après l'élément de retenue (3) est couplé un étage de sortie (6) qui amplifie la tension de sortie (Uout) de l'élément de retenue (3) et fixe à la sortie de celui-ci la tension de sortie scalée (Uscal) désirée.

9. Transducteur de mesure selon la revendication 8, **caractérisé en ce que**, l'étage de sortie (6) comprend un soustracteur (OP4) respectivement un totaliseur à l'entrée duquel se trouve la tension de sortie (Uout) de l'élément de retenue (3) et la tension de sortie (Upot) du senseur.

10. Procédé pour le réglage du point de zéro et de l'amplification de la caractéristique de sortie d'un senseur, spécialement pour les senseurs de position avec câble de mesure et angulaires, avec un intégrateur (2) dont la sortie est couplée par l'intermédiaire d'un contact (54) avec l'entrée d'un élément de retenue (3), où à l'entrée de l'intégrateur (2) se trouve la tension de sortie (Upot) du senseur (5), une tension de référence (Uref) et la tension de sortie de l'élément de retenue (3), qui sont appliquées par les contacts (S1 - S3) comprenant les pas suivants:

- la fixation des paramètres de scalage temporaires (les intervalles de temps t1, t2, T) dans un certain état initial;
- la position du senseur dans une première position (x= (x0));
- la mesure de la grandeur de sortie (Uout (x0));
- l'amenée de la grandeur de sortie (Uout(x0)) à une première valeur préétablie (Uout(x0)~0) par ce qu'on fait le calibrage d'un premier paramètre de scalage (t2);
- la position du senseur (5) dans une seconde position (x=x1);
- la mesure de la grandeur de sortie (Uout(x1));
- l'amenée de la grandeur de sortie (Uout(x1)) à une seconde valeur préétablie par ce qu'on fait le calibrage d'un second paramètre de scalage (t1);

11. Procédé selon la revendication 10, **caractérisé en ce que**, la première position du senseur (5) est un point initial (x=x0) et la seconde position est un point final (x=x1) du domaine de travail du senseur.

**12.** Procédé selon la revendication 10 ou 11, **caractérisé en ce que**, avec le premier intervalle de temps (t1) on règle l'amplification et avec le second intervalle de temps (t2) on règle la correction du point de zéro de la caractéristique de sortie du senseur.

**13.** Procédé selon l'une des revendications 10 à 12, **caractérisé en ce que**, premièrement on règle la correction du point de zéro et en continuation l'amplification.

**14.** Procédé selon l'une des revendications 10 à 13, **caractérisé en ce que**, dans un troisième pas de scalage on réalise encore une fois la correction du point de zéro.

**15.** Procédé selon l'une des revendications 10 à 14, **caractérisé en ce que**, le réglage de l'amplification et de la correction du point de nul a lieu en deux points de mesure différents du senseur (5), où le senseur est déplacé une seule fois entre les deux points de mesure (x0, x1).

**16.** Procédé selon l'une des revendications 10 à 15, **caractérisé en ce que**, le réglage de l'amplification et de la correction du point de zéro a lieu en plusieurs points de mesure ($x_0$, $x_1$), dans une seule direction des grandeurs de mesure (x).

**17.** Procédé selon l'une des revendications 10 à 16, **caractérisé en ce que**, les intervalles de temps (t1, t2) de fermeture des contacts (S1, S2) se superposent temporairement.

Positionssensor

Potentiometer

Verstärkung und Nullpunktkorrektur   1

Buffer              Integrator                    Halteglied        3

S3    R1
+Uref

7     S2    R2    C1                    2
-Uref

Upot(x)    S1    R3              S4

OP1              OP2              C2        OP3

Ausgangsstufe   6

R5

R4                         Uout(x)

OP4

R6    R7

Mikrokontroller   8

S1
S2
S3
S4

Fig 1.

EP 1 156 299 B1

12

Schalter S1

Schalter S2

Schalter S3

Schalter S4

Spannung am Ausgang
des Integrators

Spannung am Ausgang
des Halteglieds

Impulsdiagramm Verlauf der Spannung innerhalb eines Integrations-/Haltezyklus

Verlauf mit Filter in der Ausgangsstufe

Fig 2.

EP 1 156 299 B1

Verlauf der Eingangsspannung

Verlauf der Spannung
am Ausgang des Halteglieds

Verlauf der Spannung am Ausgang
der befilterten Ausgangsstufe

Impulsdiagramm Verlauf der Spannung über mehrere Integrations-/Haltezyklen

Fig. 3

Fig 4.

Einstellen der Verstärkung unter Berücksichtigung der Nullpunktverschiebung

Fig. 5

EP 1 156 299 B1

Endgültige Nullpunkteinstellung der verstärkungsrichtigen Kennlinie

Fig. 6

EP 1 156 299 B1